# EUROPÄISCHE PATENTANMELDUNG

(11) **EP 0 690 535 A1**
(43) Veröffentlichungstag der Anmeldung: **03.01.1996**
(21) Anmeldenummer: 95109373.1
(22) Anmeldetag: 16.06.1995
(51) Int. Cl.: H01S 3/108

(54) **Intrakavitätsramanlaser**

(30) Priorität: 02.07.1994 DE 4423308
(71) Anmelder: Carl Zeiss, D-89518 Heidenheim (Brenz) (DE)
(72) Erfinder: Heppner, Joachim, Dr., D-73447 Oberkochen (DE); Appt, Willibald, D-73447 Oberkochen (DE); Peter, Ralf, D-73431 Aalen (DE)

(57) **Zusammenfassung**

Intracavity-Raman-Laser mit kollimiertem Strahlengang im Raman-Medium (10) mit Single-Mode-Stokes-Resonator. Vorgesehen ist eine Modenblende (13), ein Teleskop (3) zur Anpassung des Pumplasers (20), Single-Mode auch für den Pumplaser (20), Anpassung der Modenvolumina von Pumplaser und Stokes-Resonator, sowie eine Umlenkspiegeloptik (4) zum kompakteren Aufbau.

## Beschreibung

Die Erfindung betrifft einen Intracavity-Raman-Laser mit kollimiertem Strahlengang im Raman-Medium.

Ein solcher Laser ist aus US-Z. E. O. Ammann, J. Falk, Appl. Phys. Lett. 27, (1975), 662-664 bekannt.

Ein Raman-Medium ist zwischen zwei Planspiegeln angeordnet, die den Stokes-Resonator bilden. Ein Spiegel ist zugleich Resonatorspiegel des Pumplasers, der aus einem bogenlampengepumpten Festkörperlaser, einem aktiven Q-Switch und einem weiteren Planspiegel besteht. Es wird angegeben, daß der Festkörperlaser typisch in einem transfersen Mode niedriger Ordnung läuft. Zu den Moden des Stokes-Resonators ist nichts ausgesagt.

Regelmäßig werden Raman-Laser mit Fokus in der Ramanzelle ausgeführt, da die wesentlichen nichtlinearen Prozesse überproportional von der Leistungsdichte des Pumplichts abhängen und diese Maßnahme also Laser hoher Ausgangsleistung bei hohem Wirkungsgrad ergibt.

Bekannte Raman-Laser sind als Multimode-Laser konzipiert. Multimode-Laser haben eine wesentlich höhere Strahldivergenz als Singlemode-Laser. Die Divergenz eines Singlemode-Lasers ist von der Größenordnung lambda/D, dem Verhältnis von Wellenlänge zu Strahldurchmesser am Ort der Strahltaille des Gaußschen Strahles. Die Divergenz eines Multimode-Laserstrahles kann demgegenüber um ein Vielfaches größer sein. Bei herkömmlichen Raman-Lasersystemen ist die Stokesstrahldivergenz typisch 10-fach größer als beugungsbegrenzt. Ein weiterer, gravierender Nachteil von Multimodelasern ist das nicht gaußförmige Strahlprofil innerhalb des Laser-Resonators. Das Gemisch von vielen Transfersalmoden im Resonator führt zu lokalen Feldstärkeüberhöhungen (Hot spots) auf der Laseroptik und begünstigt damit laserinduzierte Zerstörungen der Optik.

Ein Beispiel für einen solchen bekannten intracavity Raman-Laser ist in US 4 868 833 beschrieben.

Aufgabe der Erfindung ist es, einen Raman-Laser mit hoher Strahlqualität, d.h. geringer Divergenz und guter Fokussierbarkeit anzugeben, der zugleich sicheren, stabilen Betrieb bei einfachem Aufbau und gutem Wirkungsgrad zeigt.

Gelöst wird diese Aufgabe durch einen intracavity Raman-Laser mit kollimiertem Strahlengang im Raman-Medium bei dem der Stokes-Resonator als Singlemode-Resonator ausgelegt ist.

Vorteilhafte Ausführungsformen sind Gegenstand der Unteransprüche 2-13.

Ein Teleskop im Strahlengang gemäß Anspruch 7 ermöglicht die optimale Anpassung der Lichtbündelquerschnitte im Raman-Medium und im Pumplaser, wo das optisch gepumpte Verstärkungsvolumen so bestens genutzt werden kann.

Besondere Vorteile hat es zudem, wenn gemäß den Ansprüchen 9-12 wie der Stokes-Resonator auch der Pumplaser für Monomodebetrieb ausgelegt werden kann, da dann das in der Ramanzelle gepumpte Volumen optimal an das Stokes-Resonator-Modenvolumen angepaßt wird, besonders wenn die gleiche Modenblende gemäß Anspruch 11 für beide, Stokes-Resonator und Pumplaser zugleich wirksam ist. Einfacher Aufbau in wenigen Teilen, stabiler Betrieb bei hohem Wirkungsgrad und Gauß-Strahlprofil für beste Fokussierbarkeit sind dann vereint. Bevorzugt wird auch gemäß Anspruch 13, daß ein beiden Resonatoren gemeinsamer Spiegel zum Auskoppeln des Raman-verschobenen Lichts dient.

Näher erläutert wird die Erfindung anhand der Zeichnungen.
- Figur 1: zeigt schematisch ein Ausführungsbeispiel eines erfindungsgemäßen Intracavity Raman-Lasers;
- Figur 2: zeigt schematisch ein Abwandlung mit Umlenkspiegeloptik.

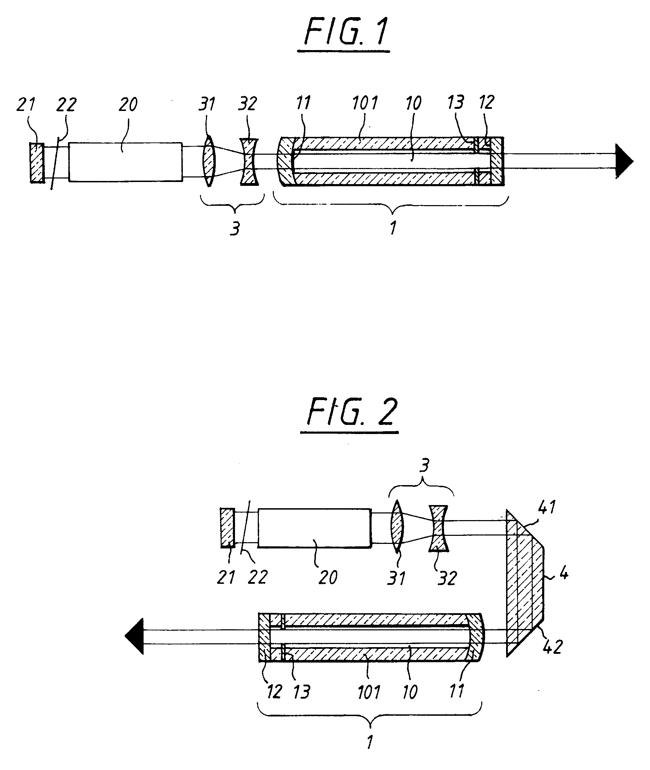

Der Stokes-Resonator 1 im Beispiel der Figur 1 enthält das Raman-Medium 10, z.B. Methan, Deuterium oder Wasserstoff, in einem Rohr 101, welches mit den Resonatorspiegeln 11 und 12 verschlossen ist. Der Resonatorspiegel 11 ist konkav mit einem Radius von 3 m, so daß der Stokes-Resonator 1 stabil wird. Der transparente Träger des Resonatorspiegels 11 ist rückseitig konvex mit dem gleichen Radius, so daß er für das Pumplicht keine Brechung zeigt. Der Resonatorspiegel 11 ist für das Pumplicht durchlässig und für das Stokeslicht maximal reflektierend dichroitisch beschichtet. Der Resonatorspiegel 12 ist der Auskoppelspiegel für das Stokeslicht und ist für das Pumplicht maximal verspiegelt. Für das Stokeslicht hat er eine Reflektivität von 0,7 ± 0,2. Die Modenblende 13 kann als absorbierende Schicht mit mittiger Öffnung direkt auf den Spiegel 12 aufgebracht sein. Sie kann aber auch als separates Bauteil in der Nähe des Resonatorspiegels 12 angeordnet sein.

Mit dem Laserstab 20, z.B. aus Nd-YAG mit planen, entspiegelten Endflächen bildet der Spiegel 21 (plan, voll reflektierend) mit oben genanntem Resonatorspiegel 12 und der passiven Q-Switch-Folie 22 mit sättigbarem Absorber den Pumplaser, der selbst durch eine nicht gezeigte Gasentladungslampe oder auf sonst bekannte Weise gepumpt wird.

Ein Teleskop 3 vom Galilei-Typ mit der Konvexlinse 31 (f = 60 mm) und im Abstand von 30 mm der Konkavlinse 32 (f = -30 mm) bewirkt eine Reduzierung des Strahlradius von 1 mm im Laserstab 20 auf 0,5 mm im Raman-Medium 10 und damit eine vierfache Erhöhung der Leistungsdichte.

Zugleich entspricht dieser Strahlradius dem Strahlradius der TEM₀₀-Mode des Stokes-Resonators 1 mit der oben angegebenen Dimensionierung. Es ist also eine optimale Anpassung des im Raman-Medium 10 vom Pumplaser gepumpten Volumens an die Grundmode des Stokes-Resonators 1 gegeben, was zu optimalem Wirkungsgrad führt. Zugleich wird damit erreicht, daß die Modenblende 13 auch für den Pumplaser als TEM₀₀-Modenblende wirkt.

Damit wird erreicht, daß der Pumplaser nur in der für die Raman-Umwandlung bestens angepaßten TEM₀₀-Mode anschwingt und keine Leistung in andere Moden abgezweigt wird.

Der Radius der Modenblende 13 beträgt 1,5 mm. Er ist damit deutlich größer als der TEM₀₀-Strahlradius (0,5 mm). Das bewirkt, daß auch der leistungsschwache Rand des Strahls ungestört ist und keine störende Beugung bzw. Dämpfung des TEM₀₀-Modes auftritt. Andererseits werden von den höheren Moden die intensivsten Zonen wirksam unterdrückt.

Die Länge des Laserstabs 20 beträgt 50 mm, die gesamte Resonatorlänge zwischen den Spiegeln 21 und 12 beträgt 220 mm.

Figur 2 zeigt eine Abwandlung der Anordnung mit kürzerer Baulänge, bei der zwischen dem Teleskop 3 und dem Stokes-Resonator 1 eine Umlenkspiegeloptik 4 angeordnet ist, die aus einem Prisma mit zwei Umlenkspiegeln 41 und 42 besteht. Damit wird der Strahlengang gefaltet und die Länge der Anordnung im wesentlichen halbiert, was zur Unterbringung bzw. stabilen Montage Vorteile hat. Die Resonatorgüte des Pumplasers 20, 21, 12 kann durch Feinabstimmung der Lage der Linsen 31, 32 des Teleskops 3 optimiert werden. So können thermische Linseneffekte des Laserstabs 20 korrigiert werden.

Wesentlich für die Erfindung ist das Zusammenwirken des kollimierten Strahlengangs im Stokes-Resonator 1 mit dem Monomodebetrieb, insbesondere im TEM₀₀-Mode. Dies ergibt einen Ausgangsstrahl sehr gut definierter stabiler Eigenschaften mit guter Fokussierbarkeit, bei einfachem störsicherem Aufbau mit gutem Wirkungsgrad. Letzterer wird durch die Maßnahmen zur Modenselektion und Anpassung des Pumplasers 20, 21, 12 noch verbessert.

Die angegebenen Abmessungen und aktiven Medien (10, 20) betreffen ein Ausführungsbeispiel. Dem Fachmann ist die Abwandlung mit anderen Medien und Dimensionierungen leicht möglich.

## Patentansprüche

1. Intracavity-Raman-Laser mit kollimiertem Strahlengang im Raman-Medium (10), dadurch gekennzeichnet, daß der Stokes-Resonator (1) als Single-Mode-Resonator ausgelegt ist.

2. Intracavity-Raman-Laser nach Anspruch 1, dadurch gekennzeichnet, daß der Stokes-Resonator (1) als TEM₀₀-Resonator ausgelegt ist.

3. Intracavity-Raman-Laser nach Anspruch 1 oder 2, dadurch gekennzeichnet, daß der Stokes-Resonator (1) eine Moden-Blende (13) enthält.

4. Intracavity-Raman-Laser nach mindestens einem der Ansprüche 1, 2 oder 3, dadurch gekennzeichnet, daß der Stokes-Resonator (1) einen Planspiegel (12) und einen Hohlspiegel (11) enthält.

5. Intracavity-Raman-Laser nach Anspruch 3 und 4, dadurch gekennzeichnet, daß die Modenblende (13) am Planspiegel (12) angeordnet ist.

6. Intracavity-Raman-Laser nach mindestens einem der Ansprüche 4-5, dadurch gekennzeichnet, daß der Planspiegel (12) des Stokes-Resonators (1) zugleich Resonatorspiegel des Pumplaser-Resonators (20, 21, 12) ist.

7. Intracavity-Raman-Laser nach mindestens einem der Ansprüche 1-6, dadurch gekennzeichnet, daß zwischen dem Stokes-Resonator (1) und dem Pumplaser-Medium (20) ein Teleskop (3) zur Strahlaufweitung im Pumplaser-Medium (20) angeordnet ist.

8. Intracavity-Raman-Laser nach mindestens einem der Ansprüche 1-7, dadurch gekennzeichnet, daß zwischen Stokes-Resonator (1) und Pumplaser-Medium (20) eine Umlenkspiegeloptik (4) angeordnet ist.

9. Intracavity-Raman-Laser nach mindestens einem der Ansprüche 1-8, dadurch gekennzeichnet, daß der Pumplaser (20, 21, 12) als Single-Mode-Laser ausgelegt ist.

10. Intracavity-Raman-Laser nach Anspruch 9, dadurch gekennzeichnet, daß der Pumplaser (20, 21, 12) als TEM₀₀-Laser ausgelegt ist.

11. Intracavity-Raman-Laser nach Anspruch 3, 8 oder 9, dadurch gekennzeichnet, daß die Modenblende (13) des Stokes-Resonators (1) zugleich als Modenblende des Pumplasers (20, 21, 12) dient.

12. Intracavity-Raman-Laser nach mindestens einem der Ansprüche 1-11, dadurch gekennzeichnet, daß der Laserstrahl des Pumplasers (20, 21, 12) im Stokes-Resonator (1) auf dessen Mode beschränkt ist.

13. Intracavity-Raman-Laser nach mindestens einem der Ansprüche 1-12, dadurch gekennzeichnet, daß ein beiden Resonatoren (1; 20, 21, 12) gemeinsamer Spiegel (12) der Auskoppelspiegel des Stokes-Resonators (1) ist.
